Europäisches Patentamt

European Patent Office

Office européen des brevets

(11) Veröffentlichungsnummer: **0 368 014**
**A1**

(12) **EUROPÄISCHE PATENTANMELDUNG**

(21) Anmeldenummer: **89118874.0**

(22) Anmeldetag: **11.10.89**

(51) Int. Cl.⁵: **G02B 6/22**

(30) Priorität: **08.11.88 DE 3837792**

(43) Veröffentlichungstag der Anmeldung:
**16.05.90 Patentblatt 90/20**

(84) Benannte Vertragsstaaten:
**DE FR GB IT NL SE**

(71) Anmelder: **KABELMETAL ELECTRO GMBH**
**Kabelkamp 20 Postfach 260**
**D-3000 Hannover 1(DE)**
(84) **DE NL**

Anmelder: **ALCATEL N.V.**
**Strawinskylaan 341 (World Trade Center)**
**NL-1077 XX Amsterdam(NL)**
(84) **FR GB IT SE**

(72) Erfinder: **Heinlein, Walter, Dr. Ing.**
**Spinozastrasse 20**
**D-6750 Kaiserslautern(DE)**
Erfinder: **Dörr, Jürgen, Dipl.-Ing.**
**Brunnenstrasse 37**
**D-6750 Kaiserslautern 31(DE)**
Erfinder: **Hauff, geb. Heun, Thomas, Dipl.-Ing.**
**Ländelstrasse 40**
**D-6750 Kaiserslautern(DE)**
Erfinder: **Stieb, Werner, Dipl.-Ing.**
**Am Krummen Bach 8**
**D-3060 Stadthagen(DE)**

(74) Vertreter: **Döring, Roger, Dipl.-Ing. et al**
**c/o Kabelmetal Electro GmbH Gewerblicher**
**Rechtsschutz Postfach 260**
**D-3000 Hannover 1(DE)**

(54) **Monomodefaser aus Quarzglas.**

(57) Es wird eine Monomodefaser aus Quarzglas angegeben, die einen Kern (2) und drei denselben konzentrisch umgebende Mantel (3,4,5) mit unterschiedlichen Brechzahlen aufweist. Zur Erzielung einer möglichst kleinen Krümmungsdämpfung und einer niedrigen Dispersion werden die Brechzahlen so eingestellt, daß die Brechzahl des Kerns (2) zwischen 0,6 % und 0,8 % höher, die Brechzahl des inneren Mantels (3) zwischen 0,6 % und 0,8 % niedriger und die Brechzahl des mittleren Mantels (4) zwischen 0,3 % und 0,6 % höher sind als die Brechzahl des äußeren Mantels (5). Außerdem liegen das Verhältnis von Außendurchmesser des inneren Mantels (3) zum Durchmesser des Kerns (2) zwischen 1,8 und 2,1 und das Verhältnis der Außendurchmesser von mittlerem (4) und innerem Mantel (3) zueinander zwischen 1,1 und 1 4.

Fig. 2

Die Erfindung bezieht sich auf eine Monomodefaser aus Quarzglas, die einen Kern und drei denselben konzentrisch umgebende Mäntel mit unterschiedlichen Brechzahlen aufweist, bei welcher die Brechzahl des Kerns größer als die Brechzahlen der Mäntel ist, bei welcher die Brechzahl des inneren, am Kern anliegenden Mantels kleiner als die Brechzahlen des mittleren und des äußeren Mantels ist und bei welcher die Brechzahl des mittleren Mantels größer als die des äußeren Mantels ist (EP-OS 0 131 634).

Derartige Monomodefasern - im folgenden kurz "Fasern" genannt - werden beispielsweise in einem Wellenlängenbereich zwischen 1280 nm (1. Fenster) und 1560 nm (2. Fenster) eingesetzt. Für eine Übertragung optischer Signale mit hoher Übertragungsrate sind dabei eine niedrige Dämpfung und eine niedrige Dispersion erforderlich. Mit bekannten Fasern können diese Forderungen nicht über den ganzen Wellenlängenbereich erfüllt werden. Die bekannte Standardfaser hat ihren Nulldurchgang der Dispersion im 1. Fenster. Sie hat im 2. Fenster eine hohe Dispersion. Das Entgegengesetzte gilt für die bekannte dispersionsverschobene Faser. Beide Fasern sind außerdem empfindlich gegen Krümmungen. Sie haben eine relativ hohe Krümmungsdämpfung.

Die bekannte Faser nach der eingangs erwähnten EP-OS 0 131 634 hat als dispersionsflache Faser im angegebenen Wellenlängenbereich eine niedrige chromatische Dispersion. Sie weist einen Kern mit drei denselben konzentrisch umgebenden Mänteln mit unterschiedlichen Brechzahlen auf, die durch bestimmte Dotierungen des Glases bei der Herstellung der Faser eingestellt werden. Dabei wird eine höhere Brechzahl beispielsweise durch eine Germaniumdotierung erreicht, während niedrigere Brechzahlen beispielsweise durch Fluordotierung eingestellt werden. Für diese bekannte Faser ist angegeben, daß das Verhältnis des äußeren zum inneren Durchmesser des mittleren Mantels sowie das Verhältnis des inneren Durchmessers des mittleren Mantels zum Durchmesser des Kerns im Bereich von 1,4 bis 1,8 liegt. Die Brechzahl des mittleren Mantels soll zwischen 0,05 und 0,15 % größer, die Brechzahl des inneren Mantels soll um 0,4 % kleiner, die Brechzahl des Kerns soll schließlich um 0,15 bis 0,4 % größer als die Brechzahl des äußeren Mantels sein. Weitergehende Angaben über die übrigen Radien- und Brechzahlverhältnisse und insbesondere über die Krümmungsempfindlichkeit der Faser sind der Druckschrift nicht zu entnehmen.

Der Erfindung liegt die Aufgabe zugrunde, eine Faser anzugeben, die für den Wellenlängenbereich von 1280 nm bis 1560 nm neben einer niedrigen chromatischen Dispersion eine geringe Krümmungsdämpfung hat.

Diese Aufgabe wird bei einer Faser der eingangs geschilderten Art gemäß der Erfindung dadurch gelöst,
- daß die Brechzahl des Kerns zwischen 0,6 % und 0,8 % höher, die Brechzahl des inneren Mantels zwischen 0,6 % und 0,8 % niedriger und die Brechzahl des mittleren Mantels zwischen 0,3 % und 0,6 % höher sind als die Brechzahl des äußeren Mantels,
- daß das Verhältnis von Außendurchmesser des inneren Mantels zum Durchmesser des Kerns zwischen 1,8 und 2,1 liegt und
- daß das Verhältnis der Außendurchmesser von mittleren und innerem Mantel zueinander zwischen 1,1 und 1,4 liegt.

Eine solche, in ihren einzelnen Schichten genau bemessene Faser hat für den Wellenlängenbereich von 1280 nm bis 1560 nm eine chromatische Dispersion $\leq$ 3,5 ps/(km x nm). Ihre Krümmungsdämpfung ist bei einem Krümmungsradius von 5 cm kleiner als $10^{-6}$ dB/m, also sehr gering. Das wird im wesentlichen dadurch erreicht, daß der Übergang vom Kern zum inneren Mantel einen steilen Brechzahlsprung aufweist, mit daraus resultierenden guten Führungseigenschaften des Kerns für das zu übertragende Licht. Die Parameter der beiden anderen Mäntel sind gleichzeitig so eingestellt, daß die resultierende Wellenleiterdispersion die Materialdispersion soweit kompensiert, daß sich in der Summe aus beiden eine sehr niedrige Gesamtdispersion ergibt. Die Faser ist also sowohl im 1. als auch im 2. Fenster bei hohen Übertragungsraten einsetzbar.

Ein Ausführungsbeispiel des Erfindungsgegenstandes ist in den Zeichnungen dargestellt.

Es zeigen:

Fig. 1 einen Querschnitt durch eine Faser nach der Erfindung.

Fig. 2 den Verlauf der Brechzahl der Faser über ihrem Radius.

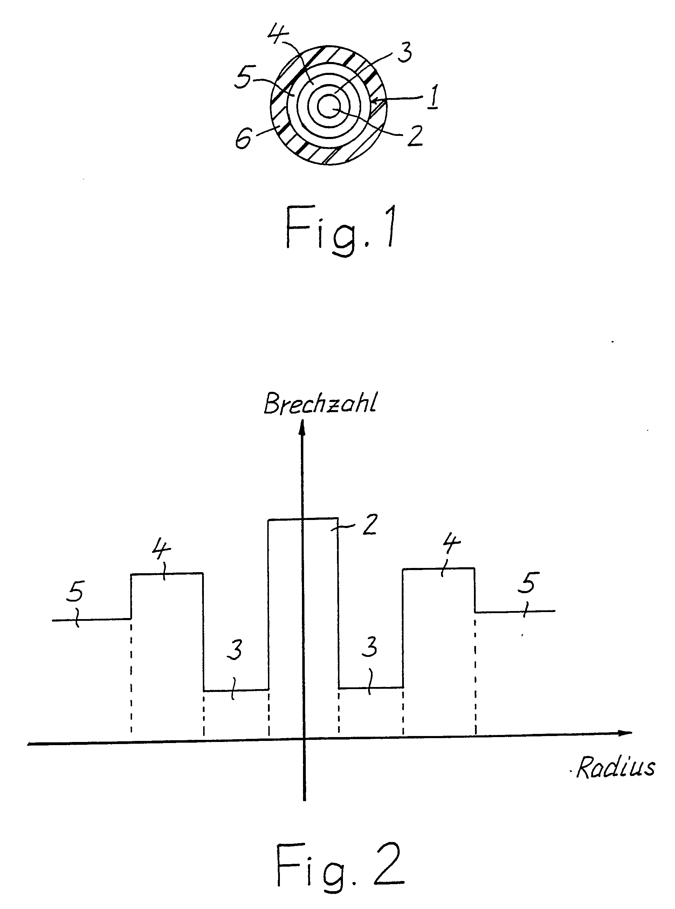

In Fig. 1 ist ein Querschnitt durch eine Faser 1 (Monomodefaser) dargestellt, deren an sich nicht erkennbare Schichten durch konzentrische Kreise angedeutet sind. Diese Schichten sind ein Kern 2, ein innerer Mantel 3, ein mittlerer Mantel 4 und ein äußerer Mantel 5. Der äußere Durchmesser solcher Fasern 1 liegt beispielsweise bei 125 $\mu$m. Über der Faser 1 kann in üblicher Technik eine Kunststoffschicht 6 als mechanischer Schutz aufgetragen sein.

Die Faser 1 bzw. ihre einzelnen Schichten kann ein Brechzahlprofil entsprechend der vergrößerten Darstellung in Fig. 2 haben. Es ist daraus zu ersehen, daß der Kern 2 die höchste Brechzahl von allen vier Schichten hat, während die Brechzahl des inneren Mantels 3 am niedrigsten ist. Die Brechzahl des mittleren Mantels 4 liegt wieder höher als die des äußeren Mantels 5.

Die Brechzahlen der einzelnen Schichten der Faser 1 liegen, auf die Brechzahl des äußeren Mantels 5 bezogen, der beispielsweise aus undotiertem Quarzglas besteht, für den Kern 2 zwischen 0,6 % und 0,8 % höher, für den inneren Mantel 3 zwischen 0,6 % und 0,8 % niedriger und für den mittleren Mantel 4 zwischen 0,3 % und 0,6 % höher. Von Bedeutung sind auch die Abmessungen des Kerns 2 und der dieselben umgebenden Mäntel 3 und 4. So ist das Verhältnis von Außendurchmesser des inneren Mantels 3 zum Durchmesser des Kerns 2 zwischen 1,8 und 2,1 festgelegt, während das Verhältnis der Außendurchmesser des mittleren Mantels 4 zum inneren Mantel 3 zwischen 1,1 und 1,4 liegt.

Die Schichten mit höherer Brechzahl, das sind Kern 2 und mittlerer Mantel 4, werden vorzugsweise mit Germanium dotiert. Für den inneren Mantel 3 wird als Dotierstoff vorzugsweise Fluor verwendet. Die Menge der Dotierstoffe hängt dabei im wesentlichen davon ab, wie die Faser 1 hergestellt wird. Es ist dabei möglich, ein Rohr aus undotiertem Quarzglas innen zu beschichten und die Faser 1 dann aus dem kollabierten Rohr zu ziehen. Die Faser 1 kann aber auch durch Beschichtung des hochdotierten Kerns 2 von außen erzeugt werden.

**Ansprüche**

1. Monomodefaser aus Quarzglas, die einen Kern und drei denselben konzentrisch umgebende Mäntel mit unterschiedlichen Brechzahlen aufweist, bei welcher die Brechzahl des Kerns größer als die Brechzahlen der Mäntel ist, bei welcher die Brechzahl des inneren, am Kern anliegenden Mantels kleiner als die Brechzahlen des mittleren und des äußeren Mantels ist und bei welcher die Brechzahl des mittleren Mantels größer als die des äußeren Mantels ist, dadurch gekennzeichhet,
- daß die Brechzahl des Kerns (2) zwischen 0,6 % und 0,8 % höher, die Brechzahl des inneren Mantels (3) zwischen 0,6 % und 0,8 % niedriger und die Brechzahl des mittleren Mantels (4) zwischen 0,3 % und 0,6 % höher sind als die Brechzahl des äußeren Mantels (5),
- daß das Verhältnis von Außendurchmesser des inneren Mantels (3) zum Durchmesser des Kerns (2) zwischen 1,8 und 2,1 liegt und
- daß das Verhältnis der Außendurchmesser von mittlerem (4) und innerem Mantel (3) zueinander zwischen 1,1 und 1,4 liegt.

Fig. 1

Brechzahl

Radius

Fig. 2

88-70/NK

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | JOURNAL OF LIGHTWAVE TECHNOLOGY Band LT-4, Nr. 7, Juli 1986, Seiten 715-719, New York, NY, USA; W. LIEBER et al.: "Three-Step Index Strictly Single-Mode, Only F-Doped Silica Fibers for Broad-Band Low Dispersion" * Zusammenfassung; Figur 1 * --- | 1 | G 02 B 6/22 |
| X | JOURNAL OF LIGHTWAVE TECHNOLOGY Band LT-4, Nr. 11, November 1986, Seiten 1651-1654, New York, NY, USA; F. RUEHL: "Cutoff Decomposition on Multiply Clad Fibers" * Seite 1651, linke Spalte, letzter Absatz; Figur 1, Tabelle 1 * --- | 1 | |
| A | PATENT ABSTRACTS OF JAPAN Band 12, Nr. 76 (P-675)(2923), 10. März 1988; & JP - A - 62 215206 (FUJITSU) 21.09.1987 --- | 1 | |
| A | PATENT ABSTRACTS OF JAPAN Band 12, Nr. 76 (P-675)(2932), 10. März 1988; & JP - A - 62 215207 (FUJITSU) 21.09.1987 --- | 1 | **RECHERCHIERTE SACHGEBIETE (Int. Cl.5)**<br><br>G 02 B 6/00 |
| A | PATENT ABSTRACTS OF JAPAN Band 12, Nr. 6 (P-653)(2853), 9. Januar 1988; & JP - A - 62 165608 (FUJITSU) 22.07.1987 --- | 1 | |
| A,D | EP-A-0 131 634 (ANT NACHRICHTENTECHNIK) * Seite 8; Figur 2 * ----- | 1 | |

Der vorliegende Recherchenbericht wurde für alle Patentansprüche erstellt

| Recherchenort | Abschlußdatum der Recherche | Prüfer |
|---|---|---|
| BERLIN | 20-12-1989 | VON MOERS F |